# EUROPEAN PATENT SPECIFICATION

(11) **EP 0 736 077 B1**
(45) Date of publication and mention of the grant of the patent: **04.11.1998**
(21) Application number: 95903670.8
(22) Date of filing: 05.12.1994
(51) Int. Cl.: C09D 5/29, C09D 5/36, C09C 1/00, B05D 5/06

(54) **COATING COMPOSITION CONTAINING OPTICALLY-VARIABLE PIGMENT**
OPTISCH VERÄNDERLICHES PIGMENT ENTHALTENDE ÜBERZUGSMASSE
COMPOSITION POUR REVETEMENTS A PIGMENTS OPTIQUEMENT VARIABLES

(30) Priority: 23.12.1993 US 172450
(43) Date of publication of application: 09.10.1996
(73) Proprietor: BASF CORPORATION, Southfield, Michigan 48086-5009 (US)
(72) Inventor: SCOTT, Kendall, Allen Park, MI 48101 (US); JOHNSON, Daniel, W., Westland, MI 48185 (US)
(74) Representative: Münch, Volker, Dr.
(86) International application number: US9413891
(87) International publication number: WO9517480

(56) References cited:
- EP-A- 0 388 931
- EP-A- 0 560 144
- EP-A- 0 571 836
- US-A- 4 434 010

## Description

### Field of the Invention

This invention relates to coating compositions, and in particular to pigmented coating compositions useful for color-plus-clear composite coatings.

### Background of the Invention

Optically-variable thin-film pigment flakes have been described in the art for a variety of applications, such as inks for counterfeit-proof applications such as currency, and generically for coating compositions. They are described, for example, in U.S. Patents 4,434,010, 4,704,356, 4,779,898, 4,838,648, 4,930,866, 5,059,245, 5,135,812, 5,171,363, and 5,214,530. These pigments are prepared by depositing inorganic transparent dielectric layers, semi-transparent metal layers, and metal reflecting layers onto a flexible web, and separating the layers from the web in such a manner as to fragment the deposited thin film layer structure into pigment particles. These particles are in the form of irregularly-shaped flat pigment flakes. These pigments are described as useful in a broad variety of applications, including coating compositions. The pigments are described in varying particle size ranges for different applications.

For example, U.S. Patent 5,059,245 claims printing inks where the pigment particles sizes range from 2 to 125 µm, and specifies that pigment particle sizes of 2 to 20 µm are preferred for certain high-resolution printing applications. The patent also claims an Intaglio^{R} ink where the pigment particle sizes range from 5 to 15 µm and constitute 20 to 30% by weight of the ink. However, for coating compositions, the patent teaches that pigment particle sizes may range up to 200 µm. It has now been discovered that coating compositions containing such broad particle sizes can produce sub-optimal coatings. For example, the preferred small particle size range of 5-15 µm in U.S. 5,059,245, when used in a coating composition, produces coatings with a less apparent optically-variable effect than may be desired. Large particle sizes can also present numerous problems, such as poor filterability, color stability, and coating defects. These problems are particularly apparent in color-plus-clear composite coatings, such as those used in the automotive industry.

In the document EP 0 571 836 A1 interference structure pigments are described. However, the particle size mentioned therein ranges from 5 to 120 µm and, thus, the above mentioned drawbacks may occur.

### Summary of the Invention

According to the present invention, there is provided a coating composition comprising a polymer resin binder and optically variable thin film pigment flakes. The pigment flakes have a multilayer thin film interference structure comprising a metal reflector layer having first and second parallel planar surfaces and, disposed on at least one of said first and second planar surfaces, at least one transparent dielectric layer. The pigment flakes further have an average particle size of 5 to 40 µm, preferably 20 to 40 µm, and a particle size distribution where no more than 10% of the particles have a particle size of greater than 50 µm and substantially none of the particles have a particle size of greater than 125 pm, the particle sizes being determined by laser diffraction. This coating composition can be used to prepare a variety of coatings, especially color-plus-clear composite coatings such as those used in the automotive industry.

The invention further relates to a coating comprising a substrate having thereon a layer of the aforedefined coating composition.

### Description of the Preferred Embodiments

Optically-variable thin-film pigment flakes are well-known in the art. Their characteristics and their preparation is described in U.S. Patents 4,434,010, 4,704,356, 4,779,898, 4,838,648, 4,930,866, 5,059,245, 5,135,812, 5,171,363, and 5,214,530.

Preferred embodiments are following. The multilayer thin film interference structure may comprise, disposed on both of said first and second planar surfaces, at least one transparent dielectric layer. It may further comprise, disposed on at least one of said first and second planar surfaces, at least one semi-opaque metal layer. It may still further comprise, disposed on both of said first and second planar surfaces, at least one semi-opaque metal layer. It is preferred when the layer configuration on each side of said first and second planar surfaces are symmetrical with each other. In detail, the multilayer thin film interference structure may comprise at least one transparent dielectric layer having an index of refraction of 1.65 or less, The thin film pigment flakes may be prepared by coating the layers of the multilayer thin film interference structure onto a flexible web, separating the web from the multilayer coating whereby flakes of the multilayer thin film interference structure are produced, and processing the flakes if necessary with regard to particle size and particle size distribution. It is preferred when said optically-variable pigment and said binder are present in a pigment:binder ratio of from 0.03:1 to 0.40:1.

A coating according to the invention may comprise a layer of the coating composition with a thickness of 10 µm to 30 µm. In particular, the substrate may be an automotive body panel.

Optically-variable thin-film pigment flakes are prepared by depositing onto a flexible web combinations of transparent dielectric layers, semi-opaque metal layers, and metal reflecting layers to form a multilayer thin film interference structure. The interference structure typically has at least one metal reflecting layer and at least one transparent dielectric layer. Various combinations of these layers can be utilized to achieve the desired optically variable effect. In a preferred embodiment, the interference structure produces a dichroic optical effect and has in order, on one side of the metal reflecting layer, at least one transparent dielectric layer and at least one semi-opaque metal layer. In a particularly preferred embodiment, this layer structure is symmetrical on both sides of the metal reflecting layer.

Aluminum is often used as the metal reflecting layer for a variety of reasons such as its cost and commercial availability, although other materials, such as gold, copper, or silver can also be used. The semiopaque metal layer can be formed from metals such as chromium, nickel, or Inconel^{R}. The transparent dielectric layers can be formed from materials such as silicon dioxide, magnesium fluoride, or aluminum oxide. Layer thicknesses can be varied according to the particular desired characteristics of the pigment. For example, U.S. 5,135,812 describes useful thicknesses being on the order of 80 nm for the metai reflecting layer, 5 nm for the semi-opaque metal layers, and thicknesses of a plurality of halfwaves of the particular design wavelength for the transparent dielectric layers.

As mentioned above, the optically-variable thin-film pigment flakes are prepared by coating the semi-opaque metal layers, transparent dielectric layers, and metal reflecting layer onto a flexible web, and separating the web from the multilayer structure to form the pigment flakes. The web is typically a polymer material, such as polyvinyl alcohol or polyethyleneterephthalate. The separation can be accomplished by stripping the multilayer structure from the web, in which case a stripping layer, as is known in the art, is preferably deposited onto the web prior to the other layers. Heat and/or solvent may be used to facilitate the stripping process. Alternatively, the web may be dissolved in a suitable solvent (aqueous or organic, depending on the solubility of the web material) to accomplish the separation. The coated web may optionally be cut or shredded to more easily fit into a container prior to the dissolution step.

As the multilayer structure is separated from the web, it typically breaks into flakes of irregular shapes and sizes. These flakes will usually require further processing to achieve the size requirements of the present invention. This can be accomplished by techniques known in the art, such as ultrasonic agitation, milling, filtering, or grinding. It may be preferred to use various combinations of solvents, surfactants, and/or resins during the size reduction process, as is known in the art. It may also be necessary to use microscopic filtering techniques, as is known in the art, to assure that the desired particle size distribution is achieved. The above-described techniques can be used to achieve the desired average particle size of 5 to 40 µm, preferably 20 to 40 µm, and the desired particle size distribution where no more than 10% of the particles have a particle size of greater than 50 µm and substantially none of the particles have a particle size of greater than 125 pm. By "substantially none", it is meant that the number of particles greater than 125 µm is small enough so as not to have any visibly adverse affect on the coating.

As used in the present invention, "particle sizes", "average particle sizes", and "particle size distributions" are determined by laser diffraction (i.e., photon correlation spectroscopy). Particle sizes, average particle sizes, and particle size distributions can be easily determined using a Malvern MasterSizer^{R} particle size analyzer, which utilizes such laser diffraction sizing techniques. Simply put, in this technique, laser light is projected into a sample, and is scattered due to the Brownian motion of an irregularly-shaped particle in a liquid to produce an angular scattering. The particle size is then determined as the diameter of a hypothetical spherical particle that would produce an equivalent degree of angular scattering.

According to the invention, the optically-variable thin-film pigment is used in a coating composition along with a binder resin. Useful pigment:binder ratios range from 0.03:1 to 0.40:1, and preferably 0.05:1 to 0.30:1. The binder used in the present invention may be selected from of any of a number of polymers known in the art. Polymers known in the art to be useful in coating compositions include acrylics, vinyls, polyurethanes, polycarbonates, polyesters, alkyds, epoxy resins, and polysiloxanes. Preferred polymers include acrylics and polyurethanes. The resin may be of the thermoplastic type, but is preferably crosslinkable, and thus comprises one or more types of cross-linkable functional groups. Such groups include, for example, hydroxy, isocyanate, amine, epoxy, acrylate, vinyl, silane, and acetoacetate groups. These groups may be masked or blocked in such a way so that they are unblocked and available for the cross-linking reaction under the desired curing conditions, generally elevated temperatures (i.e., thermoset). Useful cross-linkable functional groups include hydroxy, epoxy, acid, anhydride, silane, and acetoacetate groups. Preferred cross-linkable functional groups include hydroxy functional groups and amino functional groups.

The above-described polymers may be self-crosslinkable, or the coating composition may include a separate cross-linking agent that is reactive with the functional groups of the polymer. When the polymer comprises hydroxy functional groups, for example, the cross-linking agent may be an aminoplast resin, isocyanate and blocked isocyanates (including isocyanurates), and acid or anhydride functional cross-linking agents.

The coating composition of the present invention may be solvent-borne or water-borne. Suitable binder resins for water-borne coating compositions are water-dispersible or water-soluble ionic or nonionic resins. Anionic or nonionic resins are preferred for use in topcoat applications. Examples of water-dispersible polymers used for topcoats are contained in US Patent Nos. 4,794,147; 4,791,168; and 4,518,724, Such systems may also include a crosslinker, as described above. Polymeric-type melamine crosslinkers are often preferred for water-borne coating compositions where the binder resin is anionically stabilized, as such polymeric-type melamines do not require strong acid catalysis. When the film-forming resin is nonionically stabilized, a polymeric melamine may be used or a monomeric melamine may be used in conjunction with a strong acid catalyst like a sulfonic acid or blocked sulfonic acid.

A solvent may optionally be utilized in the coating composition of the present invention. Although the composition of the present invention may be utilized, for example, in the form of substantially solid powder, or a dispersion, it is usually preferred that the composition is in a substantially liquid state, which can be accomplished with the use of a solvent. This solvent should act as a solvent with respect to both the binder resin as well as any crosslinking agents used. In general, as is well-known in the art, depending on the solubility characteristics of the components in the coating composition, the solvent can be any of a number of organic solvent(s) and/or water. In one preferred embodiment, the solvent is a polar organic solvent. More preferably, the solvent is a polar aliphatic solvent or a polar aromatic solvent, such as a ketone, ester, acetate, aprotic amide, aprotic sulfoxide, or aprotic amine. Examples of useful solvents include methyl ethyl ketone, methyl isobutyl ketone, m-amyl acetate, ethylene glycol butyl ether-acetate, propylene glycol monomethyl ether acetate, xylene, n-methylpyrrolidone, or blends of aromatic hydrocarbons.

In another preferred embodiment, the solvent is water or a mixture of water with small amounts of aqueous co-solvents. Preferred co-solvents include acetates such as butyl acetate, hexyl acetate, and octyl acetate; glycol ethers and glycol ether acetates, such as propylene glycol ether and propylene glycol monomethyl ether acetate; and ketones, such as methyl propyl ketone, methyl isobutyl ketone, and methyl hexyl ketone. Glycol ethers and glycol ether acetates are especially preferred.

For most liquid coating compositions, the solvent may be present in an amount of from 0.01 weight percent to 99 weight percent, preferably from 10 weight percent to 60 weight percent, and more preferably from 30 weight percent to 50 weight percent.

It may be desirable to include small amounts of rheology control agents, for example fumed silicas, hectorite clays, bentonite clays, or cellulosics like cellulose acetate butyrate. Such materials are usually used at levels of less than 10% based on the total solid weight of reactants. Rheology control agents are used to control the flow and leveling of the composition during application and curing steps. The rheology control agent is also useful for controlling the metallic appearance of the coating. Such materials may help "fix" the pigment flake surface in an alignment parallel to the surface of the coating to maximize the brightness when viewed head-on and to maximize the darkness when viewed obliquely.

The coating composition of the invention may further comprise additional pigment(s). In one preferred embodiment, the coating composition of the invention further comprises a black pigment, as described in the U.S. patent application entitled "Coating Composition Containing Optically-Variable Pigment and Black Pigment", filed on even date herewith in the name of Daniel W. Johnson (see WO-A-95/17479; PCT/US94/13889). In another preferred embodiment, the coating composition of the invention further comprises a metallic flake pigment, as described in the U.S. patent application entitled "Coating Composition Containing Optically-Variable Pigment and Metallic Flake Pigment", filed on even date herewith in the name of Daniel W. Johnson (see WO-A-95/17474; PCT/US94/13888). In yet another preferred embodiment, the optically-variable thin-film pigment is a dichroic pigment, and the coating composition further comprises an interference mica in one of the colors of the optically-variable thin-film pigment, as described in the U.S. patent application entitled "Coating Composition Containing Optically-Variable Dichroic Pigment and Interference Mica Pigment", filed on even date herewith in the name of Daniel W. Johnson (see WO-A-95/17475; PCT/US94/13890). The coating composition may also contain a transparent pigment to operate in a subtractive mode to modify the colors or block unwanted colors of the optically-variable thin-film pigment. For example, in the case of a gold-to-green shifting pigment, the addition of yellow dyes or transparent yellow pigments blocks the blue reflective light at large viewing angles by absorbing the undesired colors. Combinations of any of the above-described supplementary pigments with each other or with other known pigments may also be made.

The coating compositions according to the invention can contain optional ingredients such as wetting agents, surfactants, defoamers, antioxidants, UV absorbers, light stabilizers, and plasticizers. Examples of surfactants and wetting agents include alkyl imidazolines such as those available from Ciba-Geigy Industrial Chemicals as Amine C^{R}, acetylenic alcohols available from Air Products and Chemicals as Surfynol^{R} 104. These optional ingredients, when present, constitute from 0 to 20 percent by weight of resin solids.

The prepared coating composition is applied to a substrate by any of a number of conventional means, for example by spraying, brushing, dipping or flowing. The preferred methods of application are by spraying or electrostatic spraying. These methods are widely used, especially in the application of automotive coatings. For example, the coating may be applied using a Model 62 siphon spray gun (available from Binks Manufacturing Corp., Franklin Park, Ill.) with [50-80 psi] 3,44-5,52 Bar atomizing air pressure.

The substrate to which the coating composition of this invention is to be applied may be, for example, metal, ceramic, plastic, glass, paper, or wood. The substrate may also be any of the aforementioned materials precoated with this or another coating composition. The coating compositions of this invention have been found to be particularly useful over precoated steel or plastic substrates in automotive applications. They are particularly suited to use over primed automotive substrates as topcoat formulations or basecoat formulations that are overcoated with clearcoat formulations.

After application of the coating composition to the substrate, the coating is cured, preferably by heating at a temperature and for a length of time sufficient to cause the conversion of all or nearly all of the reactive groups. The cure temperature is usually from 115°C to 180°C, and the length of cure is usually 15 minutes to 60 minutes. Preferably, the coating is cured at 120-150°C for 20 to 30 minutes. The thickness of the cured coating can be from 1 to 150 µm [microns], but when used as an automotive basecoat, the coating thickness is generally from 10 to 30 µm [microns].

In a particularly preferred embodiment, the composition of the invention is used as the pigmented basecoat of a composite color-plus-clear coating. Such composite coatings are popular for their depth of color and liquid glossy surface appearance. They have found particularly wide acceptance in the field of automotive coatings. The basecoat may be cured before the clearcoat is applied or the basecoat may be given a wet-on-wet application of a clearcoat. By the term "wet-on-wet" it is meant that after application the basecoat is allowed to flash, or dry, to remove most of the water and other solvent that it contained, but it is not cured before the clearcoat composition is applied. After the clearcoat composition is applied, it is allowed to flash or dry for a period of time, then the basecoat and the clearcoat are cured together.

The clearcoat may be a coating composition according to this invention or another composition known to the art to have utility as a clearcoat. The clearcoat does not necessarily need to use the cure mechanism used by the basecoat, although the cure mechanisms used must not interfere with one another.

The basecoat may be applied in one or two layers, with a short period between application of layers to allow solvent and water to evaporate (termed a "flash" period). After application, the basecoat may be further dried, preferably at a slightly elevated temperature, as in a 49 °C [120°F] oven, for a period of 5 to 20 minutes before the clear coat composition is applied. The clearcoat composition is preferably applied by spraying, in one layer, or preferably two layers with a short flash between layers. The clearcoat composition is allowed to flash under ambient or heated conditions for 1-20 minutes. The uncured coatings are then cured, usually by thermoset methods as described hereinabove. The resulting appearance and physical properties are excellent.

The invention is further described by the following examples.

### Examples 1-2

Coating compositions were prepared according to the following formulation (in parts by weight):

| | |
|---|---|
| OH-functional acrylic resin | 33.81 |
| melamine resin crosslinker | 17.96 |
| acrylic microgel | 30.36 |
| Nacure^{R} 5225 acid cure catalyst | 1.41 |
| fumed silica | 2.64 |
| flow control additive | 0.10 |
| Tinuvin^{R} 1130 UV absorber | 0.79 |
| methanol | 3.00 |
| optically-variable pigment | 10.57 |

The composition of Example 1 utilized a pigment with an average particle size of 24 µm and the composition of Example 2 utilized a pigment with an average particle size of 12 µm.

The coating compositions were sprayed onto a primed metal panel, flash dried, and overcoated with a clearcoat containing an OH-functional acrylic resin and a melamine resin crosslinker. The coatings were then baked for 30 minutes at 121°C to cure to a hard durable coating having a basecoat thickness of 15-20 pm and a clearcoat thickness of 41-46 µm. Both coatings exhibited an optically-variable dichroic effect. The coating of Example 1 exhibited a more clean, transparent, and intense color at viewing angles near the specular reflection. In addition, the coating of Example 2, exhibited a lighter, chalkier appearance at viewing angles far away from the specular reflection. By way of comparison, a similar coating where the optically-variable thin-film pigment flakes had an average particle size of 39 pm, with 22% of the particles having a size greater than 50 µm, had significant appearance problems, with particles of the pigment protruding from the paint film.

The invention has been described in detail with reference to particular embodiments thereof.

## Claims

1. A coating composition comprising a polymer resin binder and optically variable thin film pigment flakes, said pigment flakes having a multilayer thin film interference structure comprising a metal reflector layer having first and second parallel planar surfaces and, disposed on at least one of said first and second planar surfaces, at least one transparent dielectric layer, said pigment flakes further having an average particle size of 5 to 40 µm and a particle size distribution where no more than 10% of the particles have a particle size of greater than 50 µm and substantially none of the particles have a particle size of greater than 125 µm, particle sizes being determined by means of laser diffraction.

2. A coating composition according to claim 1 wherein the multilayer thin film interference structure comprises, disposed on both of said first and second planar surfaces, at least one transparent dielectric layer.

3. A coating composition according to claim 1 wherein the multilayer thin film interference structure further comprises, disposed on at least one of said first and second planar surfaces, at least one semi-opaque metal layer.

4. A coating composition according to claim 2 wherein the multilayer thin film interference structure further comprises, disposed on both of said first and second planar surfaces, at least one semi-opaque metal layer.

5. A coating composition according to claim 4 wherein the layer configuration on each side of said first and second planar surfaces are symmetrical with each other.

6. A coating composition according to claim 4 wherein the multilayer thin film interference structure comprises at least one transparent dielectric layer having an index of refraction of 1.65 or less.

7. A coating composition according to claim 1 wherein the optically variable thin film pigment flakes are prepared by coating the layers of the multilayer thin film interference structure onto a flexible web, separating the web from the multilayer coating whereby flakes of the multilayer thin film interference structure are produced, and processing the flakes if necessary with regard to particle size and particle size distribution.

8. A coating composition according to claim 1 wherein said optically-variable pigment and said binder are present in a pigment:binder ratio of from 0.03:1 to 0.40:1.

9. A coating composition according to claim 1 wherein said optically-variable thin film pigment flakes have an average particle size of 20 to 40 µm.

10. A coating comprising a substrate having thereon a layer of the coating composition according to claim 1.

11. A coating according to claim 10 wherein said layer of the coating composition has a thickness of 10 µm to 30 µm.

12. A coating according to claim 10 wherein said layer of the coating composition is the colored layer of a color-plus-clear composite coating.

13. A coating according to claim 10 wherein the substrate is an automotive body panel.

## Patentansprüche

1. Beschichtungszusammensetzung, enthaltend ein polymeres Harz als Bindemittel und dünne Pigmentplättchen mit einer mehrschichtigen Dünnschichtinterferenzstruktur aus einer Metallreflektorschicht mit einer ersten und einer zweiten parallelen planaren Oberfläche und mindestens einer auf mindestens einer der ersten und zweiten planaren Oberflächen abgeschiedenen transparenten dielektrischen Schicht, wobei die Pigmentplättchen ferner eine mittlere Teilchengröße von 5 bis 40 µm und eine Teilchengrößenverteilung, bei der höchstens 10% der Teilchen größer als 50 µm und im wesentlichen keine Teilchen größer als 125 µm sind, aufweisen, wobei die Teilchengrößenbestimmung laserdiffraktometrisch erfolgt.

2. Beschichtungszusammensetzung nach Anspruch 1, wobei die mehrschichtige Dünnschichtinterferenzstruktur mindestens eine sowohl auf der ersten als auch auf der zweiten planaren Oberfläche abgeschiedene transparente dielektrische Schicht aufweist.

3. Beschichtungszusammensetzung nach Anspruch 1, wobei die mehrschichtige Dünnschichtinterferenzstruktur ferner mindestens eine auf mindestens einer der ersten und zweiten planaren Oberflächen abgeschiedene semiopake Metallschicht aufweist.

4. Beschichtungszusammensetzung nach Anspruch 2, wobei die mehrschichtige Dünnschichtinterferenzstruktur ferner mindestens eine sowohl auf der ersten als auch auf der zweiten planaren Oberfläche abgeschiedene semiopake Metallschicht aufweist.

5. Beschichtungszusammensetzung nach Anspruch 4, wobei der Schichtenaufbau auf jeder Seite der ersten und der zweiten planaren Oberfläche symmetrisch ist.

6. Beschichtungszusammensetzung nach Anspruch 4, wobei die mehrschichtige Dünnschichtinterferenzstruktur mindestens eine transparente dielektrische Schicht mit einem Brechungsindex von höchstens 1,65 aufweist.

7. Beschichtungszusammensetzung nach Anspruch 1, wobei die dünnen Pigmentplättchen hergestellt werden, indem man die Schichten der mehrschichtigen Dünnschichtinterferenzstruktur auf eine flexible Bahn aufbringt, die Bahn von dem mehrschichtigen Überzug abtrennt, wobei man Plättchen der mehrschichtigen Dünnschichtinterferenzstruktur erhält, und die Plättchen gegebenenfalls hinsichtlich Teilchengröße und Teilchengrößenverteilung verarbeitet.

8. Beschichtungszusammensetzung nach Anspruch 1, wobei das optisch variable Pigment und das Bindemittel in einem Pigment-Bindemittel-Verhältnis von 0,03:1 bis 0,40:1 vorliegen.

9. Beschichtungszusammensetzung nach Anspruch 1, wobei die dünnen Pigmentplättchen des optisch variablen Pigments eine mittlere Teilchengröße von 20 bis 40 µm aufweisen.

10. Überzug aus einem Substrat mit einer Schicht aus der Beschichtungszusammensetzung gemäß Anspruch 1.

11. Überzug nach Anspruch 10, wobei die Schicht aus der Beschichtungszusammensetzung 10 µm bis 30 µm dick ist.

12. Überzug nach Anspruch 10, wobei es sich bei der Schicht aus der Beschichtungszusammensetzung um die Farbschicht einer Farblack-Klarlack-Verbundbeschichtung handelt.

13. Überzug nach Anspruch 10, wobei es sich bei dem Substrat um ein Autokarosserieblech handelt.

## Revendications

1. Composition de revêtement comprenant un liant à résine polymère et des paillettes de pigment optiquement variable en films minces, lesdites paillettes de pigment ayant une structure multicouche en films minces à interférences comprenant une couche réfléchissante métallique ayant des première et deuxième surfaces planes parallèles, et, disposée sur au moins l'une desdites première et deuxième surfaces planes, au moins une couche diélectrique transparente, lesdites paillettes de pigment ayant en outre une taille de particule moyenne de 5 à 40 µm et une répartition de taille de particule pour laquelle pas plus de 10% des particules ont une taille de particule supérieure à 50 µm et essentiellement aucune des particules n'a une taille de particule supérieure à 125 µm, les tailles de particule étant déterminées par diffraction à laser.

2. Composition de revêtement selon la revendication 1, dans laquelle la structure multicouche en films minces à interférences comprend, disposée à la fois sur ladite première et ladite deuxième surfaces planes, au moins une couche diélectrique transparente.

3. Composition de revêtement selon la revendication 1, dans laquelle la structure multicouche en films minces à interférences comprend en outre, disposée sur au moins l'une desdites première et deuxièmes surfaces planes, au moins une couche métallique semi-opaque.

4. Composition de revêtement selon la revendication 2, dans laquelle la structure multicouche en films minces à interférences comprend, disposée à la fois sur ladite première et ladite deuxième surfaces planes, au moins une couche métallique semi-opaque.

5. Composition de revêtement selon la revendication 4, dans laquelle les configurations de couches sur chaque face desdites première et deuxième surfaces planes sont symétriques l'une par rapport à l'autre.

6. Composition de revêtement selon la revendication 4, dans laquelle la structure multicouche en films minces à interférences comprend au moins une couche diélectrique transparente ayant un indice de réfraction de 1,65 ou moins.

7. Composition de revêtement selon la revendication 1, dans laquelle les paillettes de pigment optiquement variable en films minces sont préparées en appliquant les couches de la structure multicouche en films minces à interférences sur une bande flexible, en séparant la bande du revêtement multicouche, ce par quoi des paillettes de la structure multicouche en films minces à interférences sont produites, et en traitant, le cas échéant, les paillettes en ce qui concerne la taille de particule et la répartition de taille de particule.

8. Composition de revêtement selon la revendication 1, dans laquelle ledit pigment optiquement variable et ledit liant sont présents en un rapport pigment:liant de 0,03:1 à 0,40:1.

9. Composition de revêtement selon la revendication 1, dans laquelle lesdites paillettes de pigment optiquement variable en films minces ont une taille de particule moyenne de 20 à 40 µm.

10. Revêtement comprenant un substrat recouvert d'une couche de la composition de revêtement selon la revendication 1.

11. Revêtement selon la revendication 10,, dans lequel ladite couche de la composition de revêtement a une épaisseur de 10 µm à 30 µm.

12. Revêtement selon la revendication 10, dans lequel ladite couche de la composition de revêtement est la couche colorée d'un revêtement composite couleur-plus-transparence.

13. Revêtement selon la revendication 10, dans lequel le substrat est un panneau de carrosserie d'automobile.
